# EUROPÄISCHE PATENTSCHRIFT

(11) **EP 2 994 289 B1**
(45) Veröffentlichungstag und Bekanntmachung des Hinweises auf die Patenterteilung: **21.11.2018**
(21) Anmeldenummer: 14723414.0
(22) Anmeldetag: 08.05.2014
(51) Int. Cl.: B29C 47/68, B29C 47/08, B29C 47/92

(54) **VERFAHREN ZUM BETREIBEN EINES SIEBRADFILTERS**
METHOD FOR OPERATING A SCREEN WHEEL FILTER
PROCÉDÉ D'EXPLOITATION D'UN FILTRE À TAMIS ROTATIF

(30) Priorität: 10.05.2013 DE 102013208628
(43) Veröffentlichungstag der Anmeldung: 16.03.2016
(73) Patentinhaber: Gneuss GmbH, 32549 Bad Oeynhausen (DE)
(72) Erfinder: GNEUSS, Detlef, 32545 Bad Oeyhausen (DE); GNEUSS, Stephan, 32547 Bad Oeynhausen (DE); GNEUSS, Daniel, Charlotte 28277 (US)
(74) Vertreter: Tarvenkorn, Oliver
(86) Internationale Anmeldenummer: PCT/EP2014/059429
(87) Internationale Veröffentlichungsnummer: WO 2014/180946

(56) Entgegenhaltungen:
- WO-A1-92/17263
- AT-B- 408 522
- DE-A1-102006 056 471
- DE-A1-102010 036 810
- US-A1- 2010 276 353

## Beschreibung

Die Erfindung betrifft ein Verfahren zum Betreiben eines Siebradfilters für hochviskose Schmelzen mit Drücken > 10 Bar und Temperaturen > 90 °C, wobei der Siebradfilter im Wesentlichen aus einem, in einem Gehäuse angeordneten, einen von einer Siebeinsatz-Rückspülstation und/oder Siebeinsatz-Wechselstation beabstandeten Schmelze Kanal aufweisenden, mindestens einen Siebeinsatz aufnehmenden Siebrad besteht.

Siebradfilter gehören z. B. durch die DE 103 58 672 A1 zum Stand der Technik. Der bekannte Siebradfilter weist eine Filterelement-Wechselstation auf. Die DE 102 25 601 A1 offenbart einen Siebradfilter, der zusätzlich noch mit einer Rückspülstation ausgestattet ist.

Siebradfilter dienen dazu, hochviskose Schmelzen, die z. B. von einem Extruder bereitgestellt werden, zu reinigen und einer Weiterverarbeitung z. B. einem Spritzgieß-, Granulier- oder Blasvorgang zuzuführen. Bei derartigen Siebradfiltern werden die Siebräder im Wesentlichen verschmutzungsabhängig schrittweise weitergedreht, wobei das Weiterdrehen, wie aus der DE 199 61 426 A1 oder der DE 103 26 487 A1 bekannt, in bestimmten Zeitabständen, in denen ein entsprechender Verschmutzungsgrad der Siebscheibe erwartet wird, oder aber in Abhängigkeit eines den Verschmutzungsgrad der Siebscheibe signalisierenden Differenzdrucksignals erfolgt. Zwischen den Drehschritten liegen dabei regelmäßig größere Stillstand-Zeiträume. Die Addition der Dreh- und Sillstandzeiten ist regelmäßig so groß, dass die in den Siebeinsäten verbleibende Schmelze einen wesentlichen thermischen Abbau bzw. Oxidationsabbau erfahren, so dass vor jedem Wiedereintritt eines Siebeinsatzes in den Schmelzekanal z. B. in der Wechselstation nach der DE 103 58 672 A1 der Siebeinsatz aus dem Siebrad entnommen und gegen einen neuen Siebeinsatz gewechselt, oder aber vor dem Eintritt in den Schmelzekanal nach der DE 102 25 601 A1 rückgespült und damit gereinigt werden muss.

Die DE 10 2006 056 471 A1 offenbart einen Schmelzefilter, bei dem in einem Gehäuse zwei Siebscheiben mit entsprechenden Filterelementen vorgesehen sind. Jeder der Siebscheiben ist eine Rückspülstation und eine Filterelement-Wechselstation zugeordnet, wobei die Filterelement-Wechselstationen durch Klappen verschließbar sind. Dadurch wird gewährleistet, dass möglichst wenig Luft an die Siebscheiben gelangen kann. Wie dieser Schmelzefilter betrieben werden sollte, ist nicht offenbart.

Die DE 10 2010 036 810 A1 offenbart einen Schmutzabscheider für hochviskose Medien, der mit einem Siebrad arbeitet, bei dem um den Durchsatz zu erhöhen und insbesondere die Gefahr einer Materialzersetzung an den nicht in Produktionsstellung befindlichen Siebstellen zu vermindern, möglichst viele Siebstellen gleichzeitig in den Schmelzekanal eingebunden werden. Hier wird vorgeschlagen, dass sich annähernd alle Siebstellen gleichzeitig im Schmelzekanal befinden. Ist der Schmutzabscheider mit einer Wechselstation ausgestattet, so befinden sich lediglich drei der Siebstellen nicht im Schmelzekanal, und zwar die Siebstelle in der Wechselstation und eine Siebstelle vor und eine Siebstelle hinter der Wechselstation. Ist der Schmutzabscheider zusätzlich noch mit einer Rückspülstation versehen, so befinden sich annähernd alle Siebstellen bis auf vier im Schmelzekanal. Wird bei diesem Schmutzabscheider festgestellt, dass eine Siebstelle zu stark verschmutzt und die übrigen Siebstellen die Filterwirkung übernehmen müssen, so wird diese aus dem Schmelzekanal heraus in die Reinigungs- und / oder Wechselstation geführt und hier gereinigt bzw. gewechselt. Dadurch, dass annähernd alle Siebstellen im Schmelzekanal liegen, bedarf es nur einer Drehung um wenige Grad, um die Siebstelle aus dem Schmelzekanal in die Reinigungs- bzw. Wechselstation zu führen. Nach erfolgter Reinigung bzw. Wechslung der Siebstelle muss das Siebrad nur nochmals um wenige Grade verdreht werden, um wieder in den Schmelzekanal zu gelangen. Beeinträchtigungen der Schmelze werden hier dadurch minimiert, dass fast alle Siebstellen sich im Schmelzekanal befinden und nur kleine Wege zur Siebstellenreinigung bzw. Wechselstation notwendig sind und dass die Wege ebenso klein sind, gereinigte bzw. gewechselte Siebstellen wieder in den Schmelzekanal zu führen.

Unter einem wesentlichen thermische Abbau bzw. Oxidationsabbau wird z.B. verstanden, wenn sich die Molekülkettenlänge von Polymeren in der Wärme so stark verringert, dass das so veränderte Material nicht mehr störungsfrei für das Endprodukt in den Produktionsstrom eingeführt werden kann. Von einem wesentlichen thermische Abbau bzw. Oxidationsabbau wird ausgegangen, wenn mehr als 5 % der Molekülketten der entsprechenden Polymere bereits gespalten sind. Ein wesentlicher thermischer Abbau bzw. Oxidationsabbau ist aber auch zu verzeichnen, wenn sich der Kunststoffhauptbestandteil oder die im Kunststoff enthaltenen Additive so stark zersetzen, dass die Oberfläche der Verarbeitungsanlage von den Zersetzungsprodukten angegriffen wird.

Dabei sind die Zeiten, in denen ein wesentlicher thermischer Abbau bzw. Oxidationsabbau erfolgt Material- und Temperaturabhängig. Thermisch stabile Polymere können bis zu 60 min auf Verarbeitungstemperatur gehalten werden, ohne dass ein wesentlicher thermischer Abbau bzw. Oxidationsabbau erfolgt, während bei thermisch empfindlichen Schmelzen schon bei < 5 min der wesentliche thermische Abbau bzw. Oxidationsabbau eintritt.

Beim Austauschen eines Siebeinsatzes wird dieser mit der im Filtereinsatz verbleibenden Schmelze dem Siebrad entnommen und durch einen neuen, noch keine Schmelze aufweisenden Siebeinsatz ausgetauscht. Die im entnommenen Siebeinsatz verbleibende Schmelze geht dabei dem normalen Produktionsvorgang verloren.

Aber auch beim Rückspülen wird aus der bereits gereinigten Schmelze Material entnommen und im Rückspülschlitz gegen die Siebeinsätze gepresst. Dabei wird die in den Siebeinsätzen befindliche Schmelze gegen neue Schmelze ausgetauscht. Die ursprünglich in den Siebeinsätzen verbliebene Schmelze wird über einen Auswurf des Siebradfilters der Entsorgung zugeführt. Auch hier entstehen große Verluste an Schmelze, wodurch sowohl ein Wechsel der Siebeinsätze als auch ein Rückspülen der Siebeinsätze das Betreiben des Siebradfilters verteuern.

Oft erfolgt der Wechsel der Siebeinsätze und / oder das Rückspülen der Siebeinsätze, obwohl diese noch gar nicht verschmutzt sind, nur um einem thermischen- bzw. Oxidations-Abbau entgegenzuwirken.

Der Erfindung liegt die Aufgabe zugrunde, ein Verfahren zum Betreiben eines Siebradfilters dahingehend zu verbessern, dass weniger von der hochviskosen Schmelze verschwendet wird, und das sich das Betreiben des Siebradfilters kostengünstiger gestalten lässt.

Zur Lösung dieser Aufgabe wird vorgeschlagen, dass das Siebrad, bezogen auf einen der jeweilig im Schmelze Kanal befindlichen Siebeinsätze, zu zumindest einer kompletten Umdrehung drehangetrieben wird, bevor der jeweilige Siebeinsatz in der Siebeinsatz-Wechselstation gewechselt und/oder in der Siebeinsatz-Rückspülstation rückgespült wird, und wobei die Antriebsgeschwindigkeit und Antriebstaktung für das Siebrad in Abhängigkeit des thermischen- bzw. Oxidations-Abbauverhaltens der jeweiligen Schmelze so eingestellt ist, dass bei Wiedereintritt des jeweiligen Siebeinsatzes in den Schmelze Kanal des Siebradfilters die im jeweiligen Siebeinsatz verbliebene Schmelze einen thermischen Abbau bzw. Oxidationsabbau von ≤ 3 % gespaltener Molekülketten vorzugsweise ≤ 1 % gespaltener Molekülketten erfahren hat

Das Filterrad wird somit so schnell drehangetrieben, dass die in den Siebeinsätzen verbleibende Schmelze auch nach einer Umdrehung im Siebradfilter noch weiter verwendet werden kann. Ist der Siebeinsatz noch nicht durch Verunreinigungen verstopft, kann der Siebeinsatz auch mehr als einmal wiederverwendet werden. Wesentlich ist dabei, dass die im Siebeinsatz verbliebene Schmelze im Schmelzekanal immer wieder so rechtzeitig ausgetauscht wird, dass sie weiterverwendet werden kann, d.h. dass sie keinen zu großen thermischen Abbau bzw. Oxidationsabbau erfahren hat. Erfindungsgemäß ist das erreicht, wenn die Schmelze ≤ 3 % gespaltener Molekülketten aufweist. Die Bestimmung der Zahl der gespaltenen Molekülketten kann beispielsweise durch einen Vergleich der mittleren Molekülmasse der im Schmelze-Kanal befindlichen Schmelze mit der mittleren Molekülmasse der im Siebeinsatz befindlichen Schmelze unmittelbar vor Wiedereindrehen des Siebeinsatzes in den Schmelze-Kanal erfolgen, wobei eine Abhängigkeit zwischen der Zahl der gespalteten Molekülketten und der Molekülmasse besteht, z.B. eine Erhöhung der gespaltenen Molekülketten um ein 1 % entspricht ungefähr der Abnahme der Molekülmasse um 1 %.

Damit muss der Siebeinsatz erst dann tatsächlich gewechselt oder erst dann rückgespült werden, wenn der Siebeinsatz tatsächlich verschmutzt ist. Ein automatisches Auswechseln des Siebeinsatzes beim Erreichen der Wechselstation bzw. ein automatisches Rückspülen des Siebeinsatzes beim Erreichen der Rückspülstation entfällt. Ein Wechseln bzw. Rückspülen des Siebeinsatzes erfolgt erst, wenn der Siebeinsatz tatsächlich derartige Verschmutzungen aufweist, dass er zu einem weiteren Filtervorgang nicht mehr in den Schmelze Kanal gedreht werden kann.

Dadurch entfallen viele unnütze Siebeinsatzwechsel bzw. Rückspülvorgänge, so dass erheblich an hochviskoser Schmelze gespart wird.

Hinzu kommt, dass durch das entsprechend schnelle Drehen und Takten der Siebräder auch schnell auf mögliche Schwallverschmutzungen reagiert werden kann.

Kommt es bei herkömmlichem Betrieb von entsprechenden Siebradfiltern zu einer Schwallverschmutzung, kommt es regelmäßig vor, dass sich der Druck vor dem Siebeinsatz stark erhöht und diese starke Druckerhöhung dazu führt, dass der vorgeschaltete Extruder abgeschaltet wird.

Durch das verhältnismäßig schnelle Drehen des Siebrades kann auch eine mögliche Schwallverschmutzung schnell aus dem Schmelzekanal herausgedreht werden und die verschmutzten Siebeinsätze durch weniger verschmutzte bzw. neue folgende Siebeinsätze ausgetauscht werden.

Es hat sich als vorteilhaft erwiesen, dass das Siebrad mittels eines Antriebs schrittweise drehangetrieben wird, der eine Umdrehung des Siebrades in einer Zeit gewährleistet, die kürzer ist, als die Zeit, in der die Schmelze maximal 1% thermischen- bzw. Oxidations-Abbau erfahren hat.

Zu berücksichtigen ist dabei, dass ein Siebeinsatzwechsel bzw. ein Rückspülvorgang sowie das Befüllen des Rückspülsystems eine gewisse Zeit in Anspruch nimmt. Müssen während einer Siebradumdrehung oder während mehrerer Siebradumdrehungen keine Wechsel- bzw. Rückspülvorgänge durchgeführt werden, ergibt sich eine entsprechende Zeitersparnis. Sollen jedoch Wechsel- bzw. Rückspülvorgänge durchgeführt werden, so müssen die für diese Vorgänge benötigten Zeiten bei der Einstellung der Drehgeschwindigkeit des Antriebes mit berücksichtigt werden.

Ein möglicher Antrieb ist z.B. der Klinkenantriebe wie er z. B. durch die DE 103 58 672 A1 zum Stand der Technik gehört und mit dem sich große Drehgeschwindigkeiten verwirklichen lassen. Es besteht aber auch die Möglichkeit wie bei herkömmlichen Siebradfiltern das Siebrad über ein freilaufangetriebenes Zahnrad drehanzutreiben, wobei bei Rückspül-Siebradfiltern bisher grundsätzlich der Antrieb über Zahnrad und Freilauf verwendet wird.

Es hat sich bewährt, dass der Antrieb Drehwinkel von >1°, und <10°, vorzugsweise >5°, und <10° je Arbeitsschritt ausführt. Damit ist gewährleistet, dass ein ausreichend großer Drehwinkel erreicht wird und die Filtereinsätze dennoch eine ausreichende Zeit im Schmelzekanal verbleiben können.

Es hat sich aber auch bewehrt, dass das Austauschverhältnis der aktiven Siebeinsatz > 3 %, und < 10 %, vorzugsweise >5 %, und <10 % ist. Damit wird erreicht, dass die Drehbewegung des Siebrades noch groß genug ist, dass aber ein möglicher Druckabfall beim Eindrehen eines folgenden Siebeinsatzes in den Schmelzekanal noch keinen zu großen Schwankungen unterliegt.

Vorteilhaft ist, dass ein Siebeinsatzwechsel und/oder ein Rückspülen des Siebeinsatzes in Abhängigkeit von der Verschmutzung des jeweiligen Siebeinsatzes erfolgt.

Damit wird nicht während jeder Umdrehung jeder Siebeinsatz automatisch gewechselt bzw. Rückgespült, sondern das Schmelze verbrauchende Wechseln bzw. Rückspülen erfolgt erst, wenn der jeweilige Siebeinsatz für einen weiteren, wenn auch nur kurzen Filtervorgang nicht mehr herangezogen werden kann.

Die Rückspülung wird im Grunde in Abhängigkeit von der Siebeinsatzverschmutzung abgeschaltet, und nur bei Bedarf d.h. bei größerer Verschmutzung eingeschaltet. Es kann dabei z.B. nur ein besonders verschmutzter Siebeinsatz gewechselt und/oder rückgespült werden, während die anderen, noch nicht so verschmutzten Siebeinsäte für weitere Filterschritte herangezogen werden.

Ein Siebeinsatzwechsel und/oder ein Rückspülen des Siebeinsatzes kann z.B., wenn der Verschmutzungsgrad der Schmelze, und der damit verbundene zu erwartende Verschmutzungsgrad der Siebeinsätze bekannt ist, nach einer bestimmten Anzahl von Takten erfolgen.

Es besteht aber auch die Möglichkeit, einen Siebeinsatzwechsel und/oder ein Rückspülen des Siebeinsatzes in Abhängigkeit eines Differenzdrucksignals zu initialisieren. Nur wenn der Differenzdruck einen bestimmten, z.B. voreingestellten Wert überschreitet wird die Rückspülung z.B. für eine ganze Umdrehung des Siebrades, oder aber nur für eine festgelegte Anzahl von Takten oder für ein bestimmtes Tastverhältnis eingeschaltet. Selbstverständlich kann die Rückspülung auch nur für exakt die Siebeinsätze aktiviert werden, bei denen ein zu hoher Differenzdruck gemessen wurde.

Die Erfindung wird anhand einer Zeichnung näher erläutert.

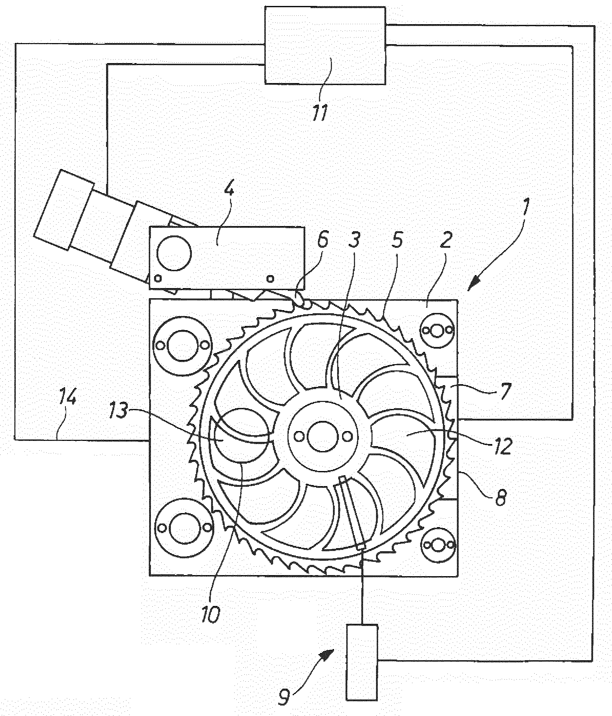

Die Figur zeigt einen Siebradfilter 1, der ein Gehäuse 2 aufweist, in dem ein Siebrad 3 drehbar gelagert ist. Das Siebrad 3 wird über einen als Klinkenantrieb ausgebildeten Drehantrieb 4 angetrieben. Das Siebrad 3 weist dazu Klinken 5 auf, in welche die Nasen 6 des Drehantriebes 4 eingreifen.

Der Figur ist weiterhin eine Siebeinsatz-Wechselstation 7 zu entnehmen, die über eine Tür 8 verschlossen ist. Weiterhin ist eine Siebeinsatz-Rückspülstation 9 zu erkennen, die in Drehrichtung vor dem Schmelzekanal 10 angeordnet ist.

Eine Steuer- bzw. Regeleinrichtung 11 ist sowohl mit dem Drehantrieb 4 als auch der Tür 8 der Siebeinsatz-Wechselstation und der Siebeinsatz-Rückspülstation 9 verbunden.

Die Steuer- bzw. Regeleinrichtung 11 kann den Siebradfilter 1 derart betreiben, dass das Siebrad 2 eine oder mehrere Umdrehungen durchführt, ohne dass ein Siebeinsatz 12 in der Siebeinsatz-Wechselstation 7 gewechselt bzw. in der Siebeinsatz-Rückspülstation 9 rückgespült wird.

Im Schmelze Kanal 10 in Fließrichtung vor und hinter einem Siebeinsatz 12 angeordnete Druckaufnehmer geben ihre Signale über die Leitungen 14 an die Steuer- bzw. Regeleinheit 11, in welcher ein Differenzdruck ermittelt wird. Dieser Differenzdruck wird mit einem vorgegebenen Differenzdruck der Steuer- bzw. Regelvorrichtung 11 verglichen und bei Überschreiten des vorgegebenen Differenzdrucks die im Steuer- bzw. Regeleinrichtung 11 angeordneten, nicht gezeigten Schaltmittel umgeschaltet, so dass wenn der Siebeinsatz 12, bei dem der vorgegebenen Differenzdruck überschritten war, in der Siebeinsatz-Wechselstation 7 bzw. der Siebeinsatz-Rückspülstation 9 angelangt ist gewechselt bzw. rückgespült wird.

### Bezugszeichenübersicht

- 1: Siebradfilter
- 2: Gehäuse
- 3: Siebrad
- 4: Drehantrieb
- 5: Klinke
- 6: Nase
- 7: Siebeinsatz-Wechselstation
- 8: Tür
- 9: Siebeinsatz-Rückspülstation
- 10: Schmelzekanal
- 11: Steuer- bzw. Regeleinrichtung
- 12: Siebeinsatz
- 13: Druckaufnehmer
- 14: Leitung

## Patentansprüche

1. Verfahren zum Betreiben eines Siebradfilters (1) für hochviskose Schmelzen mit Drücken größer als 10 Bar und Temperaturen größer als 90 °C, wobei der Siebradfilter (1) im Wesentlichen aus einem, in einem Gehäuse (2) angeordneten, einen von einer Siebeinsatz-Rückspülstation (9) und/oder Siebeinsatz-Wechselstation (7) beabstandeten Schmelze Kanal (10) aufweisenden, mindestens einen Siebeinsatz (12) aufnehmenden Siebrad (3) besteht,
**dadurch gekennzeichnet,**
**dass** das Siebrad (3), bezogen auf einen der jeweilig im Schmelze Kanal (10) befindlichen Siebeinsätze (12), zu zumindest einer kompletten Umdrehung drehangetrieben wird, bevor der jeweilige Siebeinsatz (12) in der Siebeinsatz-Wechselstation (7) gewechselt und/oder in der Siebeinsatz-Rückspülstation (9) rückgespült wird, und wobei die Antriebsgeschwindigkeit und Antriebstaktung für das Siebrad (3) in Abhängigkeit des thermischen- bzw. Oxidations-Abbauverhaltens der jeweiligen Schmelze so eingestellt ist, dass bei Wiedereintritt des jeweiligen Siebeinsatzes (12) in den Schmelze Kanal (10) des Siebradfilters (1) die im jeweiligen Siebeinsatz (12) verbliebene Schmelze einen thermischen Abbau bzw. Oxidationsabbau von ≤ 3 % gespaltener Molekülketten vorzugsweise ≤ 1 % gespaltener Molekülketten erfahren hat.

2. Verfahren nach Anspruch 1,
**dadurch gekennzeichnet,**
**dass** das Siebrad (3) mittels eines Drehantriebs (4) schrittweise drehangetrieben wird, der eine Umdrehung des Siebrades (3) in einer Zeit gewährleistet, die kürzer ist, als die Zeit, in der die Schmelze maximal 1% thermischen- bzw. Oxidations-Abbau erfahren hat.

3. Verfahren nach Anspruch 2,
**dadurch gekennzeichnet,**
**dass** der Drehantrieb (4) Drehwinkel von >1°, und <10°, vorzugsweise >5°, und <10° je Arbeitsschritt ausführt.

4. Verfahren nach einem der Ansprüche 1 bis 3,
**dadurch gekennzeichnet,**
**dass** das Austauschverhältnis der aktiven Siebeinsatz-Flächen zur Gesamtsiebfläche > 3 %, und < 10 %, vorzugsweise >5 %, und <10 % ist.

5. Verfahren nach einem der Ansprüche 1 bis 4,
**dadurch gekennzeichnet,**
**dass** ein Siebeinsatzwechsel und/oder ein Rückspülen in Abhängigkeit von der Verschmutzung des jeweiligen Siebeinsatzes (12) erfolgt.

6. Verfahren nach Anspruch 5,
**dadurch gekennzeichnet,**
**dass** ein Siebeinsatzwechsel und/oder ein Rückspülen des Siebeinsatzes (12) in Abhängigkeit des zu erwartende Verschmutzungsgrades der Siebeinsätze (12) nach einer vorgebbaren Anzahl von Takten erfolgen.

7. Verfahren nach Anspruch 5,
**dadurch gekennzeichnet,**
**dass** ein Siebeinsatzwechsel und/oder ein Rückspülen des Siebeinsatzes (12) in Abhängigkeit eines Differenzdrucksignals initialisiert wird, wobei wenn der Differenzdruck einen bestimmten, vorzugsweise voreingestellten Wert überschreitet die Rückspülung für eine ganze Umdrehung des Siebrades (3), oder aber nur für eine festgelegte Anzahl von Takten oder für ein bestimmtes Tastverhältnis oder nur für exakt die verschmutzten Siebeinsätze (12) aktiviert werden.

## Claims

1. Method for operating a screen wheel filter (1) for highly viscous melts having pressures greater than 10 bar and temperatures greater than 90° C, the screen wheel filter (1) substantially comprising a screen wheel (3) arranged in a housing (2), having a melt channel (10) spaced apart from a screen insert backwashing station (9) and/or screen insert changing station (7) and accommodating at least one screen insert (12),
**characterized in that**
relative to one of the screen inserts (12) respectively located in the melt channel (10), the screen wheel (3) is driven in rotation for at least one complete revolution before the respective screen insert (12) is changed in the screen insert changing station (7) and/or is backwashed in the screen insert backwashing station (9), and wherein the drive speed and drive cycle for the screen wheel (3) are adjusted as a function of the thermal or oxidative decomposition behaviour of the respective melt such that when the respective screen insert (12) enters the melt channel (10) of the screen wheel filter (1) again, the melt remaining in the respective screen insert (12) has experienced thermal decomposition or oxidative decomposition of ≤ 3% cleaved molecular chains, preferably ≤ 1% cleaved molecular chains.

2. Method according to Claim 1,
**characterized in that**
the screen wheel (3) is driven in rotation step by step by means of a rotary drive (4) which ensures one revolution of the screen wheel (3) in a time which is shorter than the time in which the melt has experienced a maximum of 1% thermal or oxidative decomposition.

3. Method according to Claim 2,
**characterized in that**
the rotary drive (4) executes rotational angles of > 1° and < 10°, preferably > 5° and < 10°, per working step.

4. Method according to one of Claims 1 to 3,
**characterized in that**
the exchange ratio of the active screen insert areas to the total screen area is > 3% and < 10%, preferably > 5% and < 10%.

5. Method according to one of Claims 1 to 4,
**characterized in that**
a screen insert change and/or backwashing is/are carried out as a function of the contamination of the respective screen insert (12).

6. Method according to Claim 5,
**characterized in that**
a screen insert change and/or backwashing of the screen insert (12) is/are carried out as a function of the level of contamination of the screen inserts (12) to be expected after a predefinable number of cycles.

7. Method according to Claim 5,
**characterized in that**
a screen insert change and/or backwashing of the screen insert (12) is/are initiated as a function of a differential pressure signal, wherein, when the differential pressure exceeds a specific, preferably preset, value, the backwashing is activated for a whole revolution of the screen wheel (3) or else only for a defined number of cycles or for a specific duty cycle or only for exactly the contaminated screen inserts (12).

## Revendications

1. Procédé d'exploitation d'un filtre à tamis rotatif (1) destiné à traiter des matières fondues hautement visqueuses sous des pressions supérieures à 10 bar et à des températures supérieures à 90 °C, le filtre à tamis rotatif (1) étant essentiellement constitué par un tamis rotatif (3) agencé dans un boîtier (2), comprenant un canal pour matière fondue espacé d'une station de rétrolavage d'insert de tamis (9) et/ou d'une station de remplacement d'insert de tamis (7), recevant au moins un insert de tamis (12), **caractérisé en ce que**
le tamis rotatif (3) est entraîné en rotation par rapport à l'un des inserts de tamis (12) présents dans le canal de matière fondue (10) de façon à effectuer au moins une rotation complète avant le remplacement de l'insert de tamis en question (12) dans la station de remplacement d'insert de tamis (7) et/ou le rétrolavage de l'insert de tamis en question (12) dans la station de rétrolavage d'insert de tamis (9), et la vitesse d'entraînement et la synchronisation d'entraînement du tamis rotatif (3) sont ajustées en fonction du comportement de dégradation thermique ou oxydatif de la matière fondue en question de telle sorte que, lorsque l'insert de tamis en question (12) revient dans le canal de matière fondue (10) du filtre à tamis rotatif (1), la matière fondue qui est restée dans l'insert de tamis en question (12) ait subi une dégradation thermique ou une dégradation oxydative ≤ 3 % de chaînes moléculaires dissociées, de préférence ≤ 1 % de chaînes moléculaires dissociées.

2. Procédé selon la revendication 1, **caractérisé en ce que** le tamis rotatif (3) est entraîné en rotation graduellement au moyen d'un dispositif d'entraînement en rotation (4), qui assure une rotation du tamis rotatif (3) en une durée qui est inférieure à la durée pendant laquelle la matière fondue subit au plus 1 % de dégradation thermique ou oxydative.

3. Procédé selon la revendication 2, **caractérisé en ce que** le dispositif d'entraînement en rotation (4) génère un angle de rotation > 1° et < 10°, de préférence > 5° et < 10° par étape de travail.

4. Procédé selon l'une quelconque des revendications 1 à 3, **caractérisé en ce que** le rapport d'échange entre les surfaces d'insert de tamis actives et la surface de tamis totale est > 3 % et < 10 %, de préférence > 5 % et < 10 %.

5. Procédé selon l'une quelconque des revendications 1 à 4, **caractérisé en ce qu'**un remplacement d'insert de tamis et/ou un rétrolavage ont lieu en fonction de la salissure de l'insert de tamis en question (12).

6. Procédé selon la revendication 5, **caractérisé en ce qu'**un remplacement d'insert de tamis et/ou un rétrolavage de l'insert de tamis (12) ont lieu en fonction du degré de salissure attendu des inserts de tamis (12) après un nombre prédéterminable de cycles.

7. Procédé selon la revendication 5, **caractérisé en ce qu'**un remplacement d'insert de tamis et/ou un rétrolavage de l'insert de tamis (12) sont initialisés en fonction d'un signal de pression différentielle ; lorsque la pression différentielle dépasse une valeur déterminée, de préférence préréglée, le rétrolavage étant activé pour une rotation complète du tamis rotatif (3) ou seulement pour un nombre fixé de cycles ou pour un rapport cyclique déterminé ou uniquement pour exactement les inserts de tamis salis (12).
